# EUROPÄISCHE PATENTSCHRIFT

(11) **EP 0 757 892 B1**
(45) Veröffentlichungstag und Bekanntmachung des Hinweises auf die Patenterteilung: **28.11.2001**
(21) Anmeldenummer: 96112191.0
(22) Anmeldetag: 27.07.1996
(51) Int. Cl.: A22C 13/00, C08L 1/06

(54) **Flächen- oder schlauchförmige Nahrungsmittelhülle auf der Basis von Cellulosehydrat**
Sheet or tube-like food casings based on cellulose hydrate
Enveloppes pour aliments en feuille ou tubulaires à base d'hydrate de cellulose

(30) Priorität: 05.08.1995 DE 19528890
(43) Veröffentlichungstag der Anmeldung: 12.02.1997
(73) Patentinhaber: Kalle Nalo GmbH & Co. KG, 65203 Wiesbaden (DE)
(72) Erfinder: Hammer, Klaus-Dieter, Dr., 55120 Mainz (DE); Krams, Theo, 65197 Wiesbaden (DE); König, Martina, 65207 Wiesbaden (DE)
(74) Vertreter: Zounek, Nikolai, Dipl.-Ing.

(56) Entgegenhaltungen:
- EP-A- 0 286 025
- EP-A- 0 491 637
- EP-A- 0 635 212
- EP-A- 0 638 241
- GB-A- 814 760
- US-A- 4 179 416

## Beschreibung

Die Erfindung bezieht sich auf eine flächen- oder schlauchförmige Nahrungsmittelhülle auf der Basis von Cellulosehydrat, ihre Verwendung als künstliche Wursthülle sowie ein Verfahren zu ihrer Herstellung.

Nahrungsmittelhüllen auf Cellulosehydratbasis werden gewöhnlich nach dem Viskoseverfahren hergestellt. Eine alkalische Lösung von Cellulosexanthogenat (Viskoselösung) wird durch eine ring- oder schlitzförmige Düse extrudiert, mit saurer Flüssigkeit als Cellulosehydrat-Gel koaguliert und zu Cellulosehydrat regeneriert. Durch die Zusammensetzung der Viskose und das Einarbeiten von Zusatzstoffen lassen sich die Eigenschaften der Folie variieren. Werden diese Cellulosehydrat-Folien unverstärkt als Kunstdärme eingesetzt, verwendet man sie im allgemeinen als sogenannten "Schmaldarm". Mit einer Faserverstärkung werden sie vor allem bei der Herstellung von natur- und schimmelgereifter Dauerwurst gebraucht.

Bei der Herstellung faserverstärkter Nahrungsmittelhüllen wird ein schlauch- oder bahnförmiger Faserstoff auf einer oder beiden Oberfläche(n) mit Viskoselösung beschichtet oder imprägniert und anschließend in entsprechender Weise mit Koagulations- und Regenerierflüssigkeit behandelt. Die oft geringe Naßfestigkeit solcher Hüllen läßt sich durch Vernetzen der Cellulose erhöhen. Dazu kann beispielsweise der im Gelzustand befindliche Formkörper aus Cellulosehydrat mit einer cyclischen Harnstoffverbindung, die wenigstens zwei N-Methylolgruppen aufweist, behandelt werden.

Kunstdärme müssen geschmeidig und ausreichend dehnfähig sein, um sie auch noch nach längeren Lagerzeiten problemlos mit Brät auf das gewünschte Kaliber befüllen zu können.

Es ist bekannt, diese Eigenschaften durch sekundäre Weichmacher, wie Glycerin, zu verbessern. Da diese Weichmacher nicht chemisch, sondern nur durch zwischenmolekulare Kräfte an das Cellulosehydrat gebunden sind, werden sie beim Wässern der Hülle oder beim Brühen oder Kochen der Wurst herausgelöst. Die Folge ist ein besonders starkes Verspröden der weichmacherfreien, getrockneten Cellulosehülle nach der Verarbeitung. Diese Erscheinung ist auf eine im Cellulosematerial vor sich gehende Kristallisation zurückzuführen, wobei es im Cellulosegefüge zur Ausbildung von Wasserstoffbrückenbindungen zwischen den einzelnen Cellulosemolekülen und damit zu einer Annäherung und räumlichen Fixierung der Moleküle kommt. Durch diese Strukturveränderung wird die Hülle besonders stoßempfindlich und reißt sehr häufig beim ersten Anschneiden über die gesamte Länge ein.

Auch nach längerer Lagerung sind die mit einem sekundären Weichmacher behandelten Cellulosehydrathüllen häufig versprödet und verhärtet, da der Weichmacher mit der Zeit aus der Hülle migriert. Das läßt sich verhindern, wenn zur Herstellung der Cellulosehydrathüllen eine Viskoselösung verwendet wird, die eine vernetzend wirkende Verbindung, beispielsweise einen Alkyl-trimethylol-harnstoff oder ein Alkylamin-bis-dimethylen-triazinon-tetramethylol, enthält (DE-A 23 62 551). Die Vernetzer wirken gleichzeitig als innere (auch bezeichnet als "primäre" oder "permanent wirkende") Weichmacher. Vernetzer bewirken jedoch allgemein eine Verdichtung der Cellulosehydrat-Struktur. Diese Verdichtung führt zu erheblich schlechteren Gebrauchseigenschaften der Hülle. Quellvermögen, Weiterreißfestigkeit und Dehnungsvermögen nehmen ab. Wenn der sekundäre Weichmacher entfernt ist, kann auch ein Vernetzer mit fettähnlichen Eigenschaften die Versprödung nicht mehr verhindern. Ohne sekundäre Weichmacher sind Hüllen mit verdichtetem Cellulosehydrat überhaupt nicht handhabbar.

Eine Auflockerung der Struktur ist in begrenztem Umfang durch Verändern der Fällbedingungen oder Erhöhen des Anteils an sekundärem Weichmacher möglich. Durch das Wässern vor dem Füllen der Wursthüllen ist dann jedoch die Strukturänderung um so größer. In jedem Fall wirken sich diese Änderungen nicht mehr auf die gefüllte Wursthülle aus.

Um eine dauerhafte Weichmachung zu erzielen wurde versucht, den sekundären Weichmacher unter weitgehender Erhaltung der Cellulosehydrat-Struktur chemisch "einzubauen". Dazu wurde die im Gelzustand befindliche Hülle mit der wäßrigen Lösung eines Alkylenoxids, das wenigstens mit einer reaktiven N-Methylolcarbamat-Endgruppe der Formel -CH₂-O-CO-NH-CH₂-OH modifiziert war, behandelt (DE-A 26 37 510). Auch damit gelang es nicht, Schrumpf und Verdichtung der Cellulosematrix ausreichend zu verhindern.

Die flächen- oder schlauchförmige Hülle auf Cellulosehydratbasis gemäß der DE-A 40 02 083 (= US-A 5 096 754) kommt ohne sekundären Weichmacher aus. Sie besteht im wesentlichen aus einer Mischung von Cellulosehydrat und Alginsäure und/oder Alginat. Auch bei Feuchtigkeitsgehalten (= Wassergehalten) von weniger als 10 Gew.-% sind diese Hüllen nicht spröde, dafür aber papierartig und knittrig. In einer Weiterentwicklung wurde in diese Hülle zusätzlich noch ein Copolymer mit Einheiten aus N-Vinyl-pyrrolidon und 2-Dimethylamino-ethyl-methacrylat eingearbeitet (EP-A 0 638 241).

Die Weichmachung der Formkörper auf der Basis von Cellulose gemäß EP-A 286 025 erfolgt mit einem Mischpolymer, das Einheiten aus einem Monomer mit einer endständigen ethylenisch ungesättigten Gruppe oder Einheiten von Malein- oder Fumarsäureverbindungen sowie Einheiten mit thermisch vernetzten Gruppen enthält. Dabei ist das Monomer mit einer endständigen, ethylenisch ungesättigten Gruppe vorzugsweise ein Alkyl-(meth)acrylat, während die Einheiten mit thermisch vernetzten Gruppen bevorzugt Einheiten aus N-Methylol-methacryiamid sind. Die thermische Vernetzung findet bei der Herstellung des Formkörpers statt. Darüber hinaus kann das beschriebene Mischpolymer noch Einheiten aus anderen Monomeren enthalten. Optional zählen dazu unter anderen auch Vinylether wie Vinyl-ethyl-ether.

Die US-A 4 179 416 vermittelt die Lehre, daß Maleinsäure/Methyl-vinyl-ether-Copolymere die Feuchtigkeitsaufnahme von Cellulosefasem verbessem. Die gesteigerte Feuchtigkeitsaufnahmefähigkeit der beschriebenen Fasern (Folien sind nicht offenbart) wird in erster Linie durch das Polyvinylpyrrolidon, das in der Matrix aus regenerierter Cellulose gleichmäßig dispergiert ist, erreicht. Das Polyvinylpyrrolidon kann als alleiniges hochmolekulares Additiv eingesetzt werden oder in Kombination mit anderen wasserlöslichen, vorzugsweise anionischen Polymeren. Als weitere Polymere werden in den Beispielen Carboxymethylcellulose (CMC), Carboxyethylcellulose (CEC) oder Carboxyethylstärke (CES) verwendet.

Bekannt ist schließlich auch eine Hülle, die im wesentlichen aus Cellulosehydrat, Polyvinylpyrrolidon und/oder dem bereits erwähnten Copolymer sowie gegebenenfalls noch Alginsäure bzw. Alginat besteht (EP-A 0 635 212). Diese Hülle ist zwar so geschmeidig, daß sie keinen sekundären Weichmacher benötigt, aber nicht hydrophil genug.

Cellulosehydrathüllen müssen eine möglichst niedrige Permeation aufweisen. Die Permeation ist entscheidend für das Reifeverhalten und Schimmelwachstum bei natur- und schimmelgereifter Dauerwurst. Die gleichmäßige Reifung dieser Wurstsorten verlangt eine sehr langsame Wasserabgabe aus der Wurstmasse während der ersten Tage. Bei Verwendung von üblichen faserverstärkten Cellulosehüllen muß deshalb eine sehr hohe und gleichbleibende relative Luftfeuchtigkeit der Umgebung vorherrschen, weshalb die Reifung von Rohwurst in Reifekammern erfolgt, in denen die relative Luftfeuchte in engen Grenzen geregelt ist.

Ein zu niedriger oder schwankender Feuchtegehalt der Umgebungsluft führt zu sogenannten Trockenrändern am Außenumfang der Wurst, insbesondere dann, wenn das Hüllenmaterial eine zu hohe Permeation aufweist und die Wurstmasse dadurch in den ersten Tagen der Reifung an der äußeren Oberfläche zu schnell abtrocknet. Der Trockenrand verhindert den weiteren Austritt von Feuchtigkeit aus dem Innern der Wurst, so daß sie nach der üblichen Reifezeit noch feucht ist. Außerdem haftet die Wursthülle nicht mehr ausreichend fest, so daß sich unerwünschte Zwischenräume zwischen der Wurstmasse und der Hülle sowie Falten in der Hülle ausbilden.

Weiterhin sind mechanische Festigkeit und Zähigkeit der Cellulosehydrathüllen von entscheidender Bedeutung. Kollagenfaserhüllen, die bezüglich ihrer Permeation hervorragend sind, weisen gleichzeitig völlig unzureichende mechanische Festigkeiten auf. Mit alginatmodifizierten Hüllen, die nicht faserverstärkt sind, gibt es die gleichen Probleme, obwohl der Alginatzusatz bei faser-verstärkten Hüllen sehr vorteilhafte Wirkungen hat.

Zusätzlich erwarten Wursthersteller, daß Cellulosehydrathüllen eine gute Kaliberkonstanz aufweisen, d. h. daß Würste, die aus ein und demselben Hüllenmaterial hergestellt werden, alle das gleiche Kaliber innerhalb enger Grenzen aufweisen. Diesbezüglich sind besonders die nicht faserverstärkten Hüllen verbesserungsbedürftig.

Ein weiteres Qualitätsmerkmal von Cellulosehydrathüllen ist deren Feuchtebilanz. Zum einen soll das Material einen hohen Quellwert aufweisen, d. h. möglichst große Wassermengen aufnehmen. Zum anderen ist gleichzeitig eine verzögerte Wasserabgabe erwünscht, wobei die Fähigkeit zur Wasseraufnahme und -abgabe nicht mit der Permeation gleichzusetzen ist oder damit korreliert. Die Permeation ist ein Maß für die Wasserdurchlässigkeit der Hülle, während die Feuchtebilanz das Wasseraufnahme- und Wasserbindevermögen der Hülle charakterisiert. Eine gute Feuchtebilanz gewährleistet einen problemlosen Trocknungsprozeß, bei dem keine Versprödung oder Übertrocknung der Hülle auftritt.

Es ist demnach Aufgabe der Erfindung, die vorstehend beschriebenen Nachteile bekannter Cellulosehydrathüllen zu vermeiden. Insbesondere sollen sie eine verbesserte, d. h. eine höhere, Hydrophilie, insbesondere bei faser-verstärkten Hüllen, und eine verbesserte Feuchtebilanz, d. h. eine hohe Wasseraufnahmefähigkeit und geringe Wasserabgabe, gegenüber herkömmlichen bekannten Cellulosehydrathüllen zeigen. Dabei sollen die Hüllen gleichzeitig eine gute Geschmeidigkeit und Dehnfähigkeit sowie gute mechanische Festigkeit und Zähigkeit, insbesondere bei nicht-faserverstärkten Hüllen, aufweisen und auch nach längeren Lagerzeiten nicht verspröden. Sie sollen zudem ohne oder mit nur wenig sekundärem Weichmacher (üblicherweise Glycerin) auskommen. Darüber hinaus ist eine gute Kaliberkonstanz sehr wünschenswert.

Gelöst wird die Aufgabe durch eine flächen- oder schlauchförmige Nahrungsmittelhülle auf der Basis von Cellulosehydrat, die dadurch gekennzeichnet ist, daß sie zusätzlich ein Copolymer bestehend aus Einheiten aus Methyl-vinyl-ether und Maleinsäure und/oder Alkalimaleinat in einem Anteil von 0,1 bis 60 Gew.-%, bezogen auf das Gewicht der trockenen Cellulose, enthält.

In der fertigen Nahrungsmittelhülle können die Maleinsäure-Einheiten auch als Alkalimaleat-Einheiten vorliegen. Die beiden Formen können sich ineinander umwandeln. Ihre Anteile werden durch den pH-Wert bestimmt.

Das molare Verhältnis der Einheiten aus Methyl-vinyl-ether zu den Einheiten aus Maleinsäure bzw. Alkalimaleinat beträgt in dem Copolymer allgemein 20:80 bis 80:20, bevorzugt 40:60 bis 60:40, besonders bevorzugt etwa 50:50. In den 50:50 Copolymeren bilden die Methyl-vinyl-ether- und die Maleinsäure- bzw. Alkalimaleat-Einheiten normalerweise eine alternierende Folge.

Das mittlere Molekulargewicht M_{w} der Copolymere liegt vorzugsweise bei mehr als 40 000, besonders bevorzugt sogar bei mehr als 100 000. Die Wirksamkeit der Copolymere steigt allgemein mit ihrem Molekulargewicht an.

Copolymere mit Einheiten aus Methyl-vinyl-ether und Maleinsäureanhydrid sind im Handel erhältlich, beispielsweise unter der Bezeichnung ^{(R)}Gantrez AN (CAS-Nr. 108-88-3). Sie wurden bisher in der Galenik, z.B. als Umhüllung für Dragees, oder auch als Haftmittel für Zahnprothesen verwendet. In alkalischen Medien (wie der eingangs erwähnten Viskoselösung) werden die Maleinsäureanhydridgruppen hydrolysiert, und es bildet sich das genannte Copolymer mit Einheiten aus Methyl-vinyl-ether (CH₃-O-CH=CH₂) und aus Alkalimaleat (MO₂C-CH=CH-CO₂M, M = Alkalimetall, insbesondere Na; besonders bevorzugt Dinatrium-maleat). Durch die Carboxylatgruppen ist das Copolymer im Gegensatz zu dem nicht hydrolysierten Ausgangsmaterial in Wasser sehr gut löslich. Es läßt sich auch in größeren Mengen homogen mit der Viskoselösung mischen. Aus praktischen Gründen wird jedoch allgemein eine wäßrig-alkalische Lösung, in der das Copolymer bereits hydrolysiert ist, in die Viskoselösung gegeben. Die wäßrige Lösung hat vorzugsweise einen pH-Wert von etwa 8 bis 10. Im hydrolysierten Zustand beansprucht das Copolymer ein größeres Volumen und kann damit eine Kristallisation der Cellulosehydratmoleküle besonders wirksam verhindern. Die erfindungsgemäßen Hüllen besitzen daher einen besonders hohen Quellwert und eine besonders hohe Geschmeidigkeit. Durch den größeren Volumenbedarf wird außerdem eine höhere Zahl an hydrophilen Gruppen zugänglich, so daß die Hülle mehr Wasser aufnimmt und erst über einen längeren Zeitraum wieder abgibt, was zu einer verbesserten Feuchtebilanz führt. Die Trocknung wird verlangsamt und ein Austrocknen verhindert.

Der Anteil des Copolymers mit Methyl-vinyl-ether- und Maleinsäure- bzw. Alkalimaleat-Einheiten kann in relativ weiten Grenzen schwanken und richtet sich auch nach der Art der Verwendung der Nahrungsmittelhülle. Er beträgt bevorzugt 0,5 bis 20 Gew.-%, besonders bevorzugt 0,7 bis 10 Gew.-%, ganz besonders bevorzugt 0,75 bis 5 Gew.-% (diese und alle folgenden Prozentangaben beziehen sich auf das Gewicht der trockenen Cellulose, soweit nichts anderes angegeben ist). Mit zunehmendem Anteil verbessern sich Trocknungsverhalten, Zähigkeit und Festigkeit des Materials. Bereits ab 0,5 Gew.-% wird ein Einreißen der schlauchförmigen Hüllen beim Anschneiden zuverlässig verhindert. Die Hülle läßt sich von Wurstscheiben wie auch von größeren Wurststücken problemlos abziehen, ohne daß das Brät daran in unerwünschter Weise anhaftet. Eine zusätzliche Innenbeschichtung, die die Schalbarkeit erleichtert ("easy-peel"), ist nicht erforderlich. Ab 5 Gew.-% ist kein sekundärer Weichmacher (üblicherweise Glycerin) mehr nötig. Dies gilt auch für faserverstärkte Hüllen. Die Faserverstärkung besteht allgemein aus Hanf-oder anderen Naturfasern.

Die erfindungsgemäße Nahrungsmittelhülle kann darüber hinaus noch weitere Polymere enthalten.

Geeignet sind insbesondere N-Vinyl-pyrrolidon-Copolymere mit Einheiten der Formeln I und II oder I und III 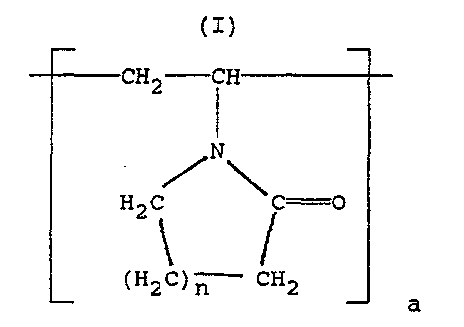 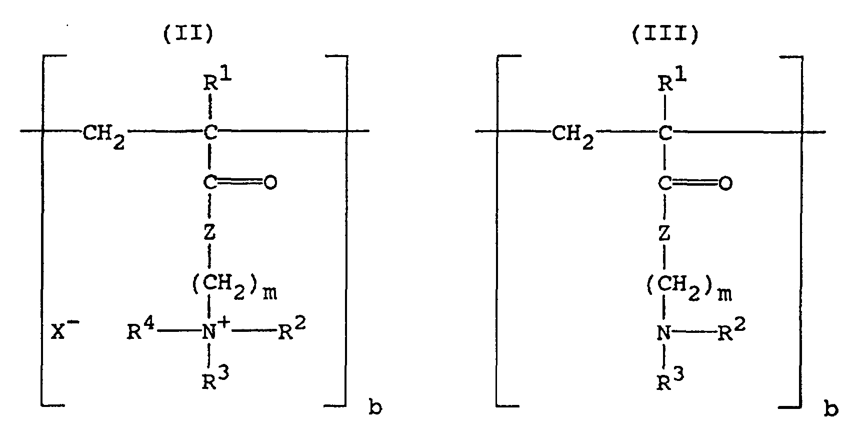 worin
- n =: 1, 2 oder 3,
- m =: 2, 3, 4, 5 oder 6,
- a =: 20 bis 80 mol-%,
- b b =: 80 bis 20 mol-% und
- a+b =: 100 mol-%,
- R¹ =: H oder ein (C₁-C₆)Alkylrest,
- R² bis R⁴: gleiche oder verschiedene (C₁-C₆)Alkylreste,
- Z =: O oder N-R⁵, worin R⁵ = H oder (C₁-C₆)Alkylreste und
- X =: Cl⁻, Br⁻, J⁻, F⁻, ½SO₄²⁻, HSO₄⁻, (C₁-C₆)-Alkyl-O-SO₂-O⁻, (C₁-C₆)Alkyl-SO₂-O⁻.
bedeuten. Bevorzugt sind Copolymere, in denen
- n =: 1 oder 3,
- m =: 2, 3 oder 4,
- a =: 30 bis 70 mol-% und
- b =: 70 bis 30 mol-% und
- a+b =: 100 mol-%,
- Z =: O oder NH,
- X =: HSO₄⁻, (C₁-C₆)Alkyl-O-SO₂-O⁻ oder (C₁-C₆)-Alkyl-SO₂-O⁻ und
- R¹ =: H oder CH₃,
- R² bis R⁴: gleich oder verschieden sind und CH₃ oder C₂H₅
bedeuten.

Die Laufzahl n ist bevorzugt 1 oder 3, d.h. das Copolymer enthält bevorzugt Einheiten aus N-Vinyl-pyrrolidon und/oder N-Vinyl-caprolactam.

Ganz besonders bevorzugt ist der Zusatz von Copolymeren mit Einheiten aus N-Vinylpyrrolidon und aus Ethyl-(2-methacryloyloxy-ethyl)-dimethylammonium-ethylsulfat sowie quaternisierte Copolymere mit Einheiten aus N-Vinyl-pyrrolidon und aus (3-Methacryloylamino-propyl)-trimethylammoniumchlorid.

Das Copolymer mit Einheiten der Formeln I und II oder I und III hat allgemein ein mittleres Molekulargewicht M_{w} von 50 000 bis 2 000 000, bevorzugt 100 000 bis 1 500 000, besonders bevorzugt 500 000 bis 1 500 000, hat. Der Anteil dieses Copolymeren beträgt allgemein bis zu 30 Gew.-%, bevorzugt 1 bis 15 Gew.-%.

Anstelle oder zusätzlich zu den erwähnten Copolymeren kann die erfindungsgemäße Hülle auch noch Alginsäure und/oder Alginat enthalten. Alginsäuren sind bekanntlich Carboxylgruppen enthaltende pflanzliche Polymere (genauer: Polysaccharide). Alginate sind die Salze der Alginsäuren, vorzugsweise die Alkali-, Ammonium- und Erdalkalisalze. Natriumalginat läßt sich beispielsweise gewinnen, indem Braunalgen mit Sodalösung extrahiert werden. Alginate bzw. Alginsäuren bestehen aus 1,4-beta-glykosidisch verknüpften D-Mannuronsäureeinheiten mit Einschüben von 1,4-alpha-glykosidisch verknüpften L-Guluronsäureeinheiten. Sie sind ähnlich wie Cellulose aus langen unverzweigten Kettenmolekülen aufgebaut. Durch die große Anzahl von Carboxylgruppen sind die Alginate bzw. Alginsäuren außerordentlich hydrophil und in der Lage, das 200- bis 300fache ihres Gewichts an Wasser zu binden. Der Anteil an Alginsäure/Alginat beträgt allgemein 1 bis 12 Gew.-%, vorzugsweise 5 bis 10 Gew.-%. Enthält die Nahrungsmittelhülle Alginsäure und/oder Alginat, dann beträgt der Anteil an Methyl-vinyl-ether/Alkalimaleat bevorzugt 0,5 bis 20 Gew.-%, besonders bevorzugt 1 bis 10 Gew.-%.

Der Quellwert der Hüllen bewegt sich zwischen 125 und 140 %, und entspricht damit in etwa dem von glycerinhaltigen Standardhüllen. Die Permeation beträgt 35 bis 50 1 Wasser pro Quadratmeter und pro Tag bei einem Druck von 40 bar. Die erfindungsgemäßen Nahrungsmittelhüllen halten einem um 5 bis 10 % über dem Sollwert liegenden Innendruck aus, bevor sie platzen. Ihr Durchmesser nimmt mit steigendem Innendruck nur wenig zu, d.h. die Dehnungskurve der reinen (= nicht-faserverstärkten) Celluloseschläuche zeigt einen steileren Verlauf. Dies ermöglicht eine genauere Kaliberkonstanz als bisher. Bei nicht faser-verstärkten Cellophanhüllen nimmt das sogenannte "relaxierte Platzkaliber", das ist das Kaliber, auf das die Hülle nach dem Platzen zurückgeht (gemessen über die Flachbreite) stark zu. Bei einem Anteil von nur 0,75 Gew.-% an Methyl-vinyl-ether/Alkalimaleinat-Copolymer ist das relaxierte Platzkaliber bereits um 10 % erhöht.

Die Summe der Anteile der "weiteren" Polymeren sollte jedoch 20 Gew.-% nicht überschreiten. Durch den Zusatz der "weiteren" Polymere lassen sich auch glycerinfreie Nahrungsmittelhüllen mit sehr guten Gebrauchseigenschaften herstellen, die weniger als 5 Gew.-%, vorzugsweise 0,1 bis 5 Gew.-%, an Methyl-vinyl-ether/Alkalimaleat-Copolymer enthalten.

Die erfindungsgemäße, unverstärkte Nahrungsmittelhülle kann außerdem einen sekundären Weichmacher wie Glycerin enthalten. Der Glyceringehalt liegt im Bereich von 8 bis 12 Gew.-%, bevorzugt von 10 bis 11 Gew.-%, bezogen auf das Gewicht der Hülle.

Die Reduzierung der einzusetzenden Glycerinmengen bei der Wursthüllenherstellung ist auch im Hinblick auf die mit dem Glycerin verbundenen Emissionsprobleme bei der Produktion und den Migrationsproblemen bei der Verarbeitung außerordentlich vorteilhaft. Sowohl glycerinfrei als auch mit reduziertem Glyceringehalt sind die Hüllen sehr geschmeidig und lassen sich problemlos trocknen, ohne daß eine nachteilige Versprödung oder Übertrocknung auftritt.

Weiterhin sind die Cellulosehydrathüllen bezüglich ihrer mechanischen Eigenschaften überraschend verbessert. Dieses Ergebnis ist nach den Erfahrungen, die mit Alginsäure und/oder Alginat als Ersatz für sekundären Weichmacher bei nicht-faserverstärkten Hüllen gesammelt wurden, besonders erstaunlich. Alginsäure lockert die Struktur des Cellulosehydrats auf und wirkt so dem eingangs beschriebenen Kristallisationsprozeß entgegen. Dadurch werden der Quellwert und die Hüllengeschmeidigkeit wesentlich verbessert. Gleichzeitig verursacht aber die Strukturauflockerung durch das Alginat eine derartige Verschlechterung der mechanischen Festigkeit, daß alginathaltige Hüllen ohne Faserverstärkung nicht zu handhaben sind. Überraschenderweise wirkt die Einarbeitung der Polymere in die Cellulosehydrathülle verbessernd auf den Quellwert und die Feuchtebilanz, wobei überraschenderweise gleichzeitig auch die mechanischen Eigenschaften verbessert sind. Dies zeigt sich z. B. an einem verbesserten Platzdruck, der 8 bis 10 % über dem Sollwert des Standardmaterials liegt, und die Kaliberschwankungen sind wesentlich geringer.

Die erfindungsgemäßen, unverstärkten Nahrungsmittelhüllen eignen sich bei der Wurstherstellung besonders als Kranz- und Schmaldarm. Aufgrund der ausgezeichneten Trennbarkeit der Hülle vom Wurstbrät ist sie auch als Schäldarm (z.B. bei der Herstellung von Frankfurter Würstchen) verwendbar.

Faserverstärkt und glycerinfrei sind die erfindungsgemäβen Hüllen in ihren Eigenschaften den Kollagenhüllen ähnlich und eignen sich damit besonders für natur- und schimmelgereifte Wurstwaren, aber auch als großkalibrige Kunstdärme.

Durch den Zusatz des Methyl-vinyl-ether/Maleinsäure/Alkalimaleat-Copolymers wird das Wasseraufnahmevermögen der Nahrungsmittelhülle, gemessen als Quellwert, deutlich erhöht. überraschenderweise vermindert die Einarbeitung des Polymers neben dem Quellwert auch die Permeation der faserverstärkten Hüllen. Diese Verbesserung beeinträchtigt jedoch nicht die mechanische Festigkeit des Materials. Dadurch ist es möglich, die Copolymere auch in größeren Mengen einzuarbeiten und dadurch die Permeation wesentlich stärker als bei alginatmodifizierten Hüllen zu senken. Zusätzlich zeichnet sich die erfindungsgemäße, faserverstärkte Cellulosehydrathülle durch eine verzögerte Abgabe von Wasser aus. Dadurch bleibt die Hülle auch nach der Verarbeitung und nach längeren Lagerzeiten der Wurst geschmeidig. Sie wird nicht stoßanfällig und reißt beim Anschneiden nicht so leicht ein wie herkömmliche Hüllen. Weiterhin wirkt sich die verzögerte Wasserabgabe positiv auf die Trocknung des Cellulosehydratschlauchs bei dessen Herstellung aus. Die Trocknung wird gedämpft und eine übermäßige Trocknung vermieden.

Bei der Wurstherstellung werden die erfindungsgemäßen Nahrungsmittelhüllen in dem üblichen Kaliber von 18 bis 200, insbesondere 40 bis 135 mm verwendet. Die faserverstärkte Nahrungsmittelhülle hat im bevorzugten Kaliberbereich von 40 bis 135 mm gewöhnlich ein Flächengewicht von 85 bis 120 g/m². Die nichtverstärkte Nahrungsmittelhülle wird bevorzugt im Kaliberbereich von 18 bis 50 mit einem Flächengewicht von 30 bis 60 g/m² eingesetzt. Bei zusätzlich enthaltenen sekundären Weichmachern, wie Glycerin, erhöht sich das Flächengewicht in Abhängigkeit von der Menge an Weichmacher entsprechend.

Die Hüllen werden in Abschnitten oder Rollen mit einem Wassergehalt von 10 Gew.-% gelagert. Der Wassergehalt der Raupen beträgt 14 bis 20 Gew.-%. Für die wässerungsfreien Raupen wird der Wassergehalt auf 23 bis 30 Gew.-% erhöht. Diese Angaben beziehen sich jeweils auf das Gesamtgewicht der Hülle.

Die erfindungsgemäßen Nahrungsmittelhüllen sind bevorzugt schlauchförmig und bestehen aus einer gebogenen Bahn, deren längsaxiale Ränder zu einer Naht verbunden sind. Sie können aber auch nahtlos durch Extrusion der Viskoselösung durch eine Ringdüse gefertigt werden.

Gegenstand der vorliegenden Erfindung ist schließlich auch ein Verfahren zur Herstellung der erfindungsgemäßen Nahrungsmittelhüllen. Darin wird das Copolymer mit Einheiten aus Methyl-vinyl-ether und aus Alkalimaleat mit der alkalischen Viskoselösung vermischt. Das Copolymer wird bevorzugt in Form einer wäßrig-alkalischen Lösung zugegeben. Die Copolymere können auch zusammen mit Farbpigmenten zudosiert werden. Das Vermischen kann im Spinnkessel oder vor der Spinndüse erfolgen. Die Lösung wird dann in üblicher Weise durch die Spinndüse extrudiert, mit einer sauren Fällflüssigkeit koaguliert und regeneriert. Die Viskoselösung ist auch bei einem hohen Anteil an Copolymer noch homogen. Fällung und Regeneration des Cellulosehydrats werden nicht beeinträchtigt.

Die Herstellung der erfindungsgemäßen Nahrungsmittelhüllen erfolgt in an sich bekannter Weise nach dem Viskoseverfahren. Das Copolymer mit Einheiten aus Methyl-vinyl-ether und aus Alkalimaleat sowie die nur gegebenenfalls vorhandenen weiteren Polymere werden mit der alkalischen Viskoselösung im gewünschten Gewichtsverhältnis homogen gemischt, und zwar entweder im Spinnkessel oder kurz vor der Spinndüse. Die Mischung aus Viskose und Copolymer wird bahn- oder schlauchförmig durch eine Spinndüse extrudiert. Bei der Herstellung von Nahrungsmittelhüllen mit einer Faserverstärkung wird in an sich bekannter Weise eine Faserbahn, die gegebenenfalls zu einem Schlauch gebogen wird, mit der Mischung aus üblicher alkalischer Viskoselösung und Copolymeren getränkt und beschichtet. Anschließend wird durch Einwirkung einer sauren Spinnflüssigkeit, die gewöhnlich Schwefelsäure enthält, die Viskose ausgefällt. Die Fällflüssigkeit befindet sich beispielsweise in einem Bad, das die extrudierte Viskoselösung bzw. die viskosierte, gegebenenfalls schlauchförmig gebogene, Faserbahn durchläuft, oder sie wird als Film durch eine Düse auf die extrudierte Viskose bzw. auf die viskosierte Faserbahn aufgebracht. Nach dem Durchlaufen der bei der Herstellung von Nahrungsmittelhüllen aus Cellulosehydrat üblichen Regenerier- und Waschbäder wird die Folie auf den üblichen Feuchtigkeitsgehalt (8 bis 10 %) getrocknet.

Sollen die erfindungsgemäßen Nahrungsmittelhüllen als Wursthüllen verwendet werden, sind sie gegebenenfalls auf der Innen- und/oder Außenseite beschichtet. Diese Beschichtung kann eine Barriereschicht gegenüber Luftsauerstoff und Wasserdampf sein. Eine Innenbeschichtung kann zur Verbesserung des Schälverhaltens und/oder zur Verbesserung der Haftung zwischen Wurstmasse und Hülleninnenwand beitragen. Aufgrund der beschriebenen guten Trennbarkeit vom Brät sind die erfindungsgemäßen kleinkalibrigen Cellulosehüllen bereits ohne easy-peel-Innenbeschichtung als Schäldarm verwendbar. Dies stellt einen besonderen Vorteil dar. Schließlich können die Hüllen auch eine fungicide Außenbeschichtung aufweisen. Gegebenenfalls enthalten sie übliche Farbpigmente, z. B. Ruß oder TiO₂. Als schlauchförmige Verpackungshüllen werden sie, beispielsweise in geraffter Form, als einseitig abgebundene Abschnitte oder, in flachgelegter Form, als Rollen in den Handel gebracht.

Die Erfindung wird durch die nachfolgenden Beispiele näher erläutert. Soweit nicht anders angegeben sind alle Prozentangaben Gewichtsprozente. Gt steht dabei für Gewichtsteile.

### Beispiel 1 (nicht faserverstärkte Hülle)

Eine 2,5 %ige wäßrige Methyl-vinyl-ether/Alkalimaleat-Copolymerlösung wurde hergestellt, indem

| | |
|---|---|
| 1,5 Gt | Methyl-vinyl-ether/Maleinsäureanhydrid-Copolymer (^{(R)}Gantrez AN 169BF der GAF Chemicals Corp., USA) zu |
| 54 Gt | Wasser und |
| 1,2 Gt | NaOH |

gegeben wurden. Die Lösung hatte einen pH-Wert von 13,5.

In einem kontinuierlichen Verfahren wurden dann 2,6 l/h von dieser Lösung mit 112 l/h Viskoselösung (Cellulosegehalt 7,2 %) gleichmäßig vermischt und durch eine Ringdüse mit einem Durchmesser von 40 mm (Kaliber 40) in ein Spinnbad üblicher Zusammensetzung extrudiert. Der dabei gebildete Gelschlauch durchlief dann die üblichen Fäll-, Wasch- und Weichmacherbäder. Danach wurde er mit Luft auf das Nennkaliber aufgeblasen, getrocknet bis zu einer Restfeuchte von 8 bis 10 % und anschließend aufgewickelt. Es wurde dann bis zu einem Feuchtegehalt von 14 bis 16 % befeuchtet und gerafft. Die so hergestellte schlauchförmige Hülle enthielt 0,75 Gew.-% Methyl-vinyl-ether/Alkalimaleat-Copolymer, bezogen auf das Gewicht der Cellulose.

Der Platzdruck der so hergestellten Hülle lag bei 35 kPa (Sollwert: 30 kPa). Die statische Dehnung bei einem Innendruck von 15 kPa lag bei 44,5 mm (tolerierter Bereich: 42,5 bis 46,5 mm). Der Quellwert lag bei 135 % (Standardmaterial: 140 %).

Beim Füllen mit Fleischwurstbrät wurde ein konstantes Füllkaliber von 44 mm erreicht. Die Hülle zeigte keine Ausfälle, etwa durch Platzen. Das anschließende Brühen und Räuchern verlief normal. Die Wurst ließ sich im heißen wie im kalten Zustand anschneiden, ohne daß die Hülle dabei einriß oder platzte. Die Hülle ließ sich zudem leicht und ohne anhaftende Brätreste abschälen.

### Beispiel 2 (nicht faserverstärkte Hülle)

Ein Kranzdarm im Kaliber 45 wurde in einem kontinuierlichen Verfahren hergestellt. Dazu wurde die Viskoselösung (210 l/h) mit 4,5 l/h einer aus

| | |
|---|---|
| 1,5 Gt | Methyl-vinyl-ether/Maleinsäureanhydrid-Copolymer (^{(R)}Gantrez AN 169BF), |
| 54 Gt | Wasser, |
| 1,2 Gt | NaOH |
| 2,285 Gt | Pigmentpraparation (^{(R)}Novofilbraun HFR der Hoechst AG), |
| 1,015 Gt | Pigmentpräparation (^{(R)} Novofilgelb A-RR der Hoechst AG) und |
| 1,3 Gt | 56,5 %iger wäßriger Milchsäure |

hergestellten Lösung (pH-Wert: 9,0) vermischt und auf die beschriebene Weise extrudiert. Waschen, Weichmachen und Trocknen in Kranzform erfolgten wie üblich. Danach wurde die Hülle wiederum wie beschrieben aufgewickelt, befeuchtet und dann abschnittsweise zu sogenannten "Raupen" gerafft.

Beim Füllen, Brühen und Räuchern der Fleischwurst traten keine Probleme auf. In einer Zweitverpackung konnten die Würste über mehrere Monate gelagert werden, ohne daß sie sich dabei verändern. Beim Anschneiden der kalten oder heißen Fleischwürste riß die Hülle nicht ein. Sie ließ sich leicht und ohne anhaftendes Brät abziehen.

### Beispiel 3 (faserverstärkte Hülle)

Hanffaserpapier (Flächengewicht 17 g/m²) wurde zu einem Schlauch (Kaliber 45 mm) geformt. Die Schlauchinnen- und -außenseite wurde mit einem Gemisch aus 112 l/h alkalischer Viskoselösung (Cellulosegehalt 7,2 %) und 12,1 l/h einer 10%igen wäßrigen Lösung (pH 13,0; Viskosität: 317 cP, gemessen nach Höppler) aus

| | |
|---|---|
| 18,43 Gt | 2 %ige wäßrige NaOH, |
| 0,2 Gt | Methyl-vinyl-ether/Maleinsäureanhydrid-Copolymer (^{(R)}Gantrez AN 169BF), |
| 0,57 Gt | Na-Alginat (^{(R)}Protacell 20 der Protan A/S, Norwegen) und |
| 0,8 Gt | 50 %ige wäßrige Ca-Stearat-Lösung (^{(R)}Lubranil CA), |

beschichtet. Von dieser Mischung wurden 60 % auf die Außenseite und 40 % auf die Innenseite des Faserpapierschlauches aufgebracht. Der Schlauch passiert dann die üblichen Fäll- und Waschkufen (eine gesonderte Weichmachung erfolgte hier nicht). Der glycerinfreie Schlauch wurde dann auf Kaliber aufgeblasen und bis zu einem Restfeuchtegehalt von 12 bis 14 % getrocknet. Das Gewicht der so hergestellten Nahrungsmittelhülle betrug 76 g/m². Anschließend wurde der Schlauch wie beschrieben befeuchtet und abschnittsweise zu "Raupen" gerafft.

Der Schlauch war sehr geschmeidig, zäh und fest. Er enthielt 1,5 Gew.-% Methyl-vinyl-ether/Alkalimaleat-Copolymer, 3,4 Gew.-% Na-Alginat und 3 Gew.-% Ca-Stearat, jeweils bezogen auf das Gewicht der Cellulose. Der Platzdruck lag 10 % über dem Sollwert, die statische Dehnung innerhalb des Toleranzbereichs. Der Quellwert lag bei 150 % (Standard: 130 bis 140 %). Die Permeation betrug 48 l/m²d bei 40 bar Innendruck.

Die Raupen wurden auf einer automatischen Füllmaschine mit Dauerwurstbrät gefüllt. Ausfälle traten dabei nicht auf. Reifeverlauf und Schimmelbewuchs waren ähnlich günstig wie bei Kollagenhüllen. Die Schälbarkeit der fertigen Würste war gut. Auch unter ungünstigen Reifebedingungen wurde keine Trockenrandbildung beobachtet. Das bedeutet, durch die niedrige Permeation wurden ungünstige Bedingungen in der Reifekammer kompensiert.

## Patentansprüche

1. Nahrungsmittelhülle auf Basis von Cellulosehydrat, **dadurch gekennzeichnet, daß** sie zusätzlich ein Copolymer bestehend aus Einheiten aus Methyl-vinyl-ether und Maleinsäure und/oder Alkalimaleat in einem Anteil von 0,1 bis 60 Gew.-%, bezogen auf das Gewicht der trockenen Cellulose, enthält.

2. Nahrungsmittelhülle gemäß Anspruch 1, **dadurch gekennzeichnet, daß** das molare Verhältnis der Einheiten aus Methyl-vinyl-ether zu den Einheiten aus Maleinsäure und/oder Alkalimaleat in dem Copolymer 20:80 bis 80:20, bevorzugt 40:60 bis 60:40, besonders bevorzugt etwa 50:50 beträgt.

3. Nahrungsmittelhülle gemäß Anspruch 1 oder 2, **dadurch gekennzeichnet, daß** das mittlere Molekulargewicht M_{w} des Copolymers bei mehr als 40 000, bevorzugt bei mehr als 100 000, liegt.

4. Nahrungsmittelhülle gemäß einem oder mehreren der Ansprüche 1 bis 3, **dadurch gekennzeichnet, daß** der Anteil des Copolymers 0,5 bis 20 Gew.-%, bevorzugt 0,7 bis 10 Gew.-%, besonders bevorzugt 0,75 bis 5 Gew.-%, jeweils bezogen auf das Gewicht des (trockenen) Cellulosehydrats, beträgt.

5. Nahrungsmittelhülle gemäß einem oder mehreren der Ansprüche 1 bis 4, **dadurch gekennzeichnet, daß** sie noch mindestens ein weiteres Polymer enthält.

6. Nahrungsmittelhülle gemäß Anspruch 5, **dadurch gekennzeichnet, daß** das weitere Polymer ein N-Vinylpyrrolidon-Copolymer mit Einheiten der Formeln I und II oder I und III 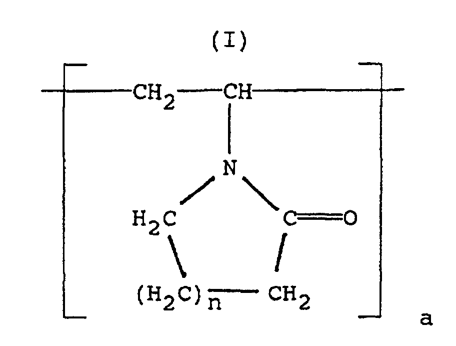 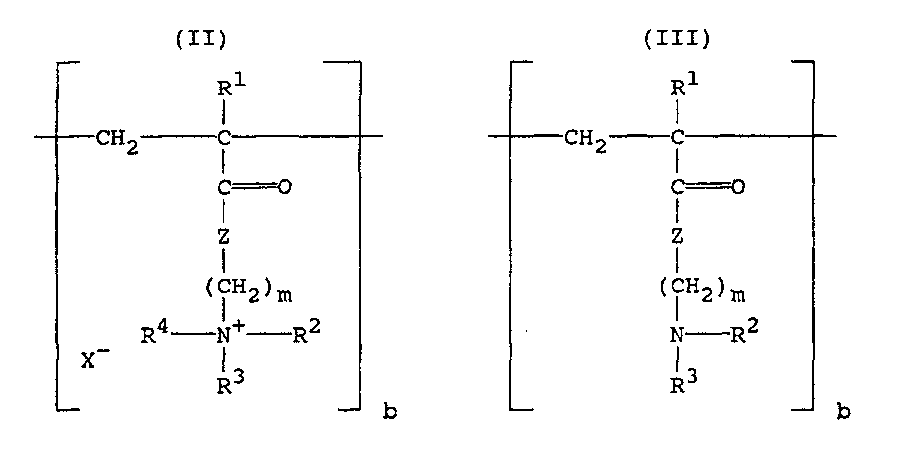 ist, worin
n = 1, 2 oder 3,
m = 2, 3, 4, 5 oder 6,
a = 20 bis 80 mol-%,
b = 80 bis 20 mol-% und
a+b = 100 mol-%,
R¹ = H oder ein (C₁-C₆)Alkylrest,
R² bis R⁴ gleiche oder verschiedene (C₁-C₆)-Alkylreste,
Z = O oder N-R⁵, worin R⁵ = H oder (C₁-C₆)Alkylreste und
X = Cl⁻, Br⁻, J⁻, F⁻, ½SO₄²⁻, HSO₄⁻, (C₁-C₆)-Alkyl-O-SO₂-O⁻, (C₁-C₆)-Alkyl-SO₂-O⁻.
bedeuten.

7. Nahrungsmittelhülle gemäß Anspruch 6, **dadurch gekennzeichnet, daß**
n = 1 oder 3,
m = 2, 3 oder 4,
a = 30 bis 70 mol-% und
b = 70 bis 30 mol-% und
a+b = 100 mol-%,
Z = O oder NH,
X = HSO₄⁻, (C₁-C₆)Alkyl-O-SO₂-O⁻ oder (C₁-C₆)Alkyl-SO₂-O⁻ und
R¹ = H oder CH₃,
R² bis R⁴ gleich oder verschieden sind und CH₃ oder C₂H₅
bedeuten.

8. Nahrungsmittelhülle gemäß Anspruch 6 oder 7, **dadurch gekennzeichnet, daß** das Copolymer mit Einheiten der Formeln I und II oder I und III ein mittleres Molekulargewicht M_{w} von 50 000 bis 2 000 000, bevorzugt 100 000 bis 1 500 000, besonders bevorzugt 500 000 bis 1 500 000, hat.

9. Nahrungsmittelhülle gemäß einem oder mehreren der Ansprüche 6 bis 8, **dadurch gekennzeichnet, daß** der Anteil an Copolymeren mit Einheiten der Formeln I und II oder I und III bis zu 30 Gew.-%, bevorzugt 1 bis 15 Gew.-%, jeweils bezogen auf das Gewicht der trockenen Cellulose, beträgt.

10. Nahrungsmittelhülle gemäß einem oder mehreren der Ansprüche 1 bis 9, **dadurch gekennzeichnet, daß** sie Alginsäure und/oder Alginat enthält.

11. Nahrungsmittelhülle gemäß Anspruch 10, **dadurch gekennzeichnet, daß** Der Anteil der Alginsäure und/oder Alginats 1 bis 12 Gew.-%, bevorzugt 5 bis 10 Gew.-%, jeweils bezogen auf das Gewicht der Cellulose, beträgt.

12. Nahrungsmittelhülle gemäß einem oder mehreren der Ansprüche 1 bis 11, **dadurch gekennzeichnet, daß** sie mit einem Papier aus Naturfasern, bevorzugt aus Hanffasern, verstärkt ist.

13. Nahrungsmittelhülle gemäß Anspruch 12, **dadurch gekennzeichnet, daß** sie glycerinfrei ist.

14. Verfahren zur Herstellung einer Nahrungsmittelhülle gemäß einem oder mehreren der Ansprüche 1 bis 13, **dadurch gekennzeichnet, daß** das Copolymer mit Einheiten aus Methyl-vinyl-ether und aus Alkalimaleat mit der Viskose vermischt, die entstandene homogene Lösung extrudiert, mit einer sauren Fällflüssigkeit koaguliert und regeneriert wird.

15. Verwendung der Nahrungsmittelhülle gemäß einem oder mehreren der Ansprüche 1 bis 11 als Schäldarm.

16. Verwendung der Nahrungsmittelhülle gemäß Anspruch 12 oder 13 zur Umhüllung von ungeräucherter oder geräucherter Brühwurst oder von natur- oder schimmelgereifter Dauerwurst.

## Claims

1. A food casing based on cellulose hydrate, which additionally contains a copolymer consisting of units of methyl vinyl ether and maleic acid and/or alkali metal maleate in a proportion of 0.1 to 60% by weight, based on the weight of the dry cellulose.

2. The food casing as claimed in claim 1, wherein the molar ratio of units of methyl vinyl ether to the units of maleic acid and/or alkali metal maleate in the copolymer is 20:80 to 80:20, preferably 40:60 to 60:40, particularly preferably about 50:50.

3. The food casing as claimed in claim 1 or 2, wherein the mean molecular weight M_{w} of the copolymer is greater than 40,000, preferably greater than 100,000.

4. The food casing as claimed in one or more of claims 1 to 3, wherein the proportion of the copolymer is 0.5 to 20% by weight, preferably 0.7 to 10% by weight, particularly preferably 0.75 to 5% by weight, in each case based on the weight of the (dry) cellulose hydrate.

5. The food casing as claimed in one or more of claims 1 to 4, wherein it additionally contains at least one further polymer.

6. The food casing as claimed in claim 5, wherein the further polymer is an N-vinylpyrrolidone copolymer having units of the formulae I and II or I and III 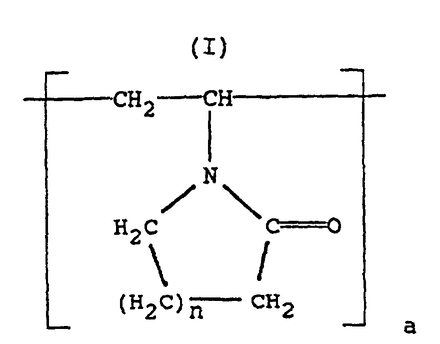 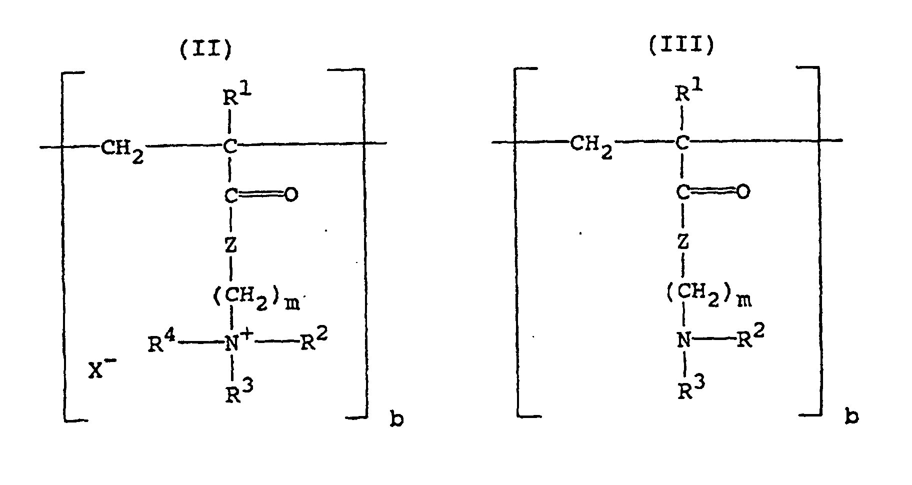 in which
n = 1, 2 or 3,
m = 2, 3, 4, 5 or 6,
a = 20 to 80 mol %,
b = 80 to 20 mol % and
a+b = 100 mol %,
R¹ = H or an (C₁-C₆)-alkyl radical,
R² to R⁴ are identical or different (C₁-C₆)-alkyl radicals,
z = O or N-R⁵, in which R ⁵= H or (C₁-C₆)-alkyl radicals and
X = Cl⁻, Br⁻, I⁻, F⁻, ½SO₄²⁻, HSO₄⁻, (C₁-C₆)-alkyl-O-SO₂-O-⁻, (C₁-C₆)-alkyl-SO₂-O⁻.

7. The food casing as claimed in claim 6, wherein
n = 1 or 3,
m = 2, 3 or 4,
a = 30 to 70 mol % and
b = 70 to 30 mol % and
a+b = 100 mol %,
Z = O or NH,
X = HSO₄⁻, (C₁-C₆)-alkyl-O-SO₂-O⁻ or (C₁-C₆)-alkyl-SO₂-O⁻ and
R¹ = H or CH₃,
R² to R⁴ are identical or different and are CH₃ or C₂H₅.

8. The food casing as claimed in claim 6 or 7, wherein the copolymer having units of the formulae I and II or I and III has a mean molecular weight M_{w} of 50,000 to 2,000,000, preferably 100,000 to 1,500,000, particularly preferably 500,000 to 1,500,000.

9. The food casing as claimed in one or more of claims 6 to 8, wherein the proportion of copolymers having units of the formulae I and II or I and III is up to 30% by weight, preferably 1 to 15% by weight, in each case based on the weight of the dry cellulose.

10. The food casing as claimed in one or more of claims 1 to 9, wherein it contains alginic acid and/or alginate.

11. The food casing as claimed in claim 10, wherein the proportion of alginic acid and/or alginate is 1 to 12% by weight, preferably 5 to 10% by weight, in each case based on the weight of the cellulose.

12. The food casing as claimed in one or more of claims 1 to 11, wherein it is reinforced with a paper made of natural fibers, preferably made of hemp fibers.

13. The food casing as claimed in claim 12, wherein it is glycerol-free.

14. A process for producing a food casing as claimed in one or more of claims 1 to 13, which comprises mixing the copolymer having units of methyl vinyl ether and of alkali metal maleate with the viscose, extruding the resulting homogeneous solution and coagulating and regenerating it with an acidic precipitant liquid.

15. Use of the food casing as claimed in one or more of claims 1 to 11 as peelable casing.

16. Use of the food casing as claimed in claim 12 or 13 for encasing unsmoked or smoked scalded-emulsion sausage or naturally or mold-ripened long-life sausage.

## Revendications

1. Enveloppe pour aliment à base d'hydrate de cellulose, qui contient en outre un copolymère constitué d'unités méthylvinyléther et acide maléique et/ou maléate alcalin, en une proportion de 0,1 à 60 % en poids sur la base du poids de la cellulose sèche.

2. Enveloppe pour aliment selon la revendication 1, dans laquelle le rapport molaire des unités méthylvinyléther sur les unités acide maléique et/ou maléate alcalin est compris dans le copolymère entre 20:80 et 80:20, de préférence entre 42:60 et 60:40 et est, de façon particulièrement préférée, de l'ordre de 50:50.

3. Enveloppe pour aliment selon la revendication 1 ou selon la revendication 2, dans laquelle le poids moléculaire moyen M_{w} du copolymère est supérieur à 40 000, et de préférence supérieur à 100 000.

4. Enveloppe pour aliment selon une ou plusieurs des revendications 1 à 3, dans laquelle la proportion du copolymère est comprise entre 0,5 et 20 % en poids, de préférence entre 0,7 et 10 % en poids, d'une manière particulièrement préférable entre 0,75 et 5 % en poids, sur la base du poids de l'hydrate de cellulose (sec) dans chaque cas.

5. Enveloppe pour aliment selon une ou plusieurs des revendications 1 à 4, qui contient en outre au moins un autre polymère.

6. Enveloppe pour aliment selon la revendication 5, dans laquelle l'autre polymère est un copolymère de N-vinylpyrolidone comportant des unités des formules I et II ou I et III 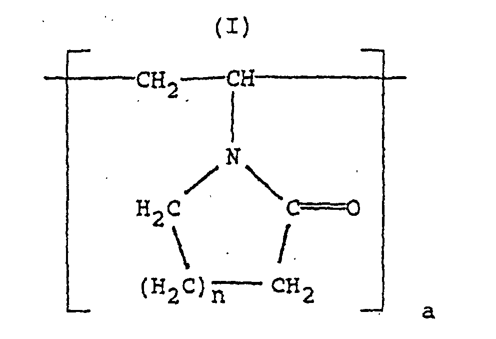 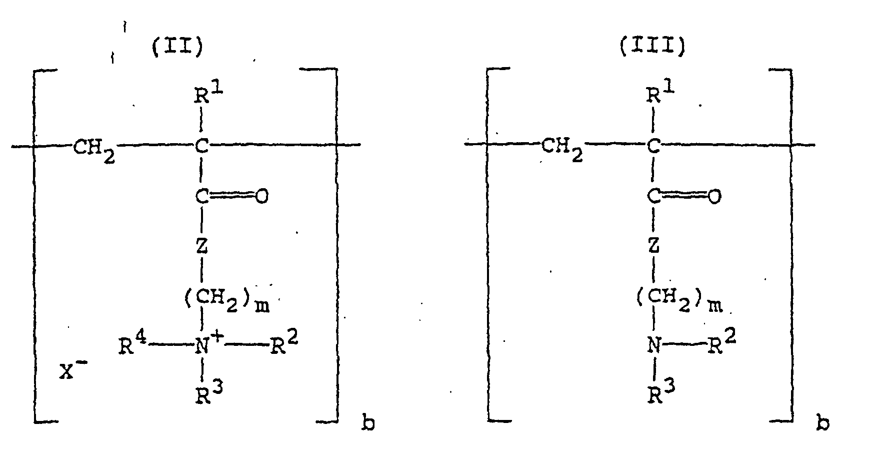 dans lesquelles
n = 1, 2 ou 3
m = 2, 3, 4, 5 ou 6
a = 20 à 80 % en moles
b = 80 à 20 % en moles, et
a + b = 100 % en moles,
R¹ = H ou un radical alkyle en C₁-C₆,
R² à R⁴ sont des radicaux alkyle en C₁-C₆, identiques ou différents;
Z = 0 ou N-R⁵, avec R⁵ = H ou des radicaux alkyle en C₁-C₆, et
X = Cl⁻, Br⁻, J⁻, F⁻, 1/2SO₄²⁻, HSO₄⁻, alkyle(C₁-C₆)-O-SO₂-O⁻, alkyle(C₁-C₆)-SO₂-O⁻.

7. Enveloppe pour aliment selon la revendication 6, dans laquelle
n = 1 ou 3
m = 2, 3 ou 4
a = 30 à 70 % en moles
b = 70 à 30 % en moles, et
a + b = 100 % en moles,
Z = 0 ou NH,
X = HSO₄⁻, alkyle (C₁-C₆)-O-SO₂-O⁻, alkyle(C₁-C₆)-SO₂-O⁻, et
R¹ = H ou CH₃,
R² et R⁴, identiques ou différents, représentent CH₃ ou C₂H₅.

8. Enveloppe pour aliment selon la revendication 6 ou selon la revendication 7, dans laquelle le copolymère possédant des unités des formules I et II ou I et III possède un poids moléculaire moyen M_{w} compris entre 50 000 et 2 000 000, de préférence entre 100 000 et 1 500 000, et, de façon particulièrement préférée, entre 500 000 et 1 500 000.

9. Enveloppe pour aliment selon une ou plusieurs des revendications 6 à 8, dans laquelle la proportion de copolymères possédant des unités des formules I et II ou I et III représente jusqu'à 30 % en poids, et de préférence est comprise entre 1 et 15 % en poids, sur la base du poids de la cellulose sèche, dans tous les cas.

10. Enveloppe pour aliment selon une ou plusieurs des revendications 1 à 9, qui contient de l'acide alginique et/ou un alginate.

11. Enveloppe pour aliment selon la revendication 10, dans laquelle la proportion d'acide alginique et/ou d'alginate est comprise entre 1 et 12 % en poids, de préférence entre 5 et 10 % en poids, sur la base du poids de la cellulose, dans tous les cas.

12. Enveloppe pour aliment selon une ou plusieurs des revendications 1 à 11, qui est renforcée par un papier formé de fibres naturelles, de préférence formé de fibres de chanvre.

13. Enveloppe pour aliment selon la revendication 12, qui est exempte de glycérol.

14. Procédé pour fabriquer une enveloppe pour aliment selon une ou plusieurs des revendications 1 à 13, qui comprend une étape consistant à mélanger le copolymère possédant les unités méthylvinyléther et maléate alcalin avec la viscose, à extruder la solution homogène résultante, et à la coaguler et à la régénérer à l'aide d'un liquide acide de précipitation.

15. Utilisation de l'enveloppe pour aliment selon l'une ou plusieurs des revendications 1 à 11, en tant qu'enveloppe pelable.

16. Utilisation de l'enveloppe pour aliment selon la revendication 12 ou 13 pour envelopper une saucisse fumée ou non fumée à bouillir ou bien une saucisse à longue durée de conservation affinée naturellement ou à l'aide de moisissures.
